(19) Europäisches Patentamt / European Patent Office / Office européen des brevets

(11) **EP 3 001 304 A1**

(12) **EUROPEAN PATENT APPLICATION**

(43) Date of publication:
30.03.2016  Bulletin 2016/13

(51) Int Cl.:
*G06F 3/12* (2006.01)

(21) Application number: 15186337.0

(22) Date of filing: 22.09.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 26.09.2014  EP 14186640

(71) Applicant: **OCE-Technologies B.V.**
**5914 CA Venlo (NL)**

(72) Inventors:
• **VERDUIN, Pieter**
  **5914 CA Venlo (NL)**
• **DE GROOT, Richard M.**
  **5914 CA Venlo (NL)**

(74) Representative: **Vanoppen, Ronny R.J.**
**Océ-Technologies B.V.**
**Corporate Patents**
**Postbus 101**
**5900 MA Venlo (NL)**

(54)   **USER INTERFACE FOR A DOCUMENT PROCESSING SYSTEM**

(57)   A user interface for a document processing system, comprising a scheduler (34) adapted to calculate and display an expected processing time for a job to be processed, characterized in that the scheduler has an input device (40, 42, 48) permitting a user to input a calibration command causing the scheduler to apply a user-specific calibration function to the calculated expected processing time.

Fig. 5

EP 3 001 304 A1

## Description

The invention relates to a user interface for a document processing system, comprising a scheduler adapted to calculate and display an expected processing time for a job to be processed.

More particularly, the invention relates to a user interface of a high production printing and/or copying system to which print or copy jobs are submitted by a plurality of users either locally at the machine or from remote work stations that are connected to the document processing system via a network. Typically, the jobs to be processed involve printing of a large number of copies, so that the processing time for completing a job may be in the order of magnitude of several minutes or even hours. Then, it is desirable for the users to know the expected job processing time and, consequently, an estimate of the time when the job will be ready, so that the printed copies can be fetched from the machine.

It is known to calculate an estimate for the processing time by means of a scheduling algorithm that takes into account the number of copies or prints to be made, the printing speed, necessary time gaps between successive copy sheets, extra times for reversing the sheets in case of duplex printing, times required for heat-fusing toner images on the sheets, and the like. Some of these factors may also depend upon the current state and operating condition of the printing system, e.g. the current temperature of fuse stations, humidity and temperature of ambient air, and the like. When the document processing system includes also finishers or other accessory equipment for sorting, collating, stapling, punching or folding the printed sheets, the times required for these operations will also have to be taken into account.

Nevertheless, even when relatively complex scheduling algorithms are used, the processing time can only be predicted with a limited accuracy. The reason is that many of the factors that have to be taken into account are subject to statistical variations and cannot be known accurately. For example, in a printing system, a relatively time-consuming step that has to be performed for each page to be printed is the so-called raster image processing (RIP), wherein print data that are given in a page description language are converted into a bitmap suitable for driving the printing elements of the printer. This process may involve relatively complex calculations to be carried out by an electronic data processing system, and the calculation time will depend upon the contents to be printed, e.g. whether the image is a black/white image or a colour image, contains photographs or graphic art or text only, and the like, so that the time needed for RIP may vary from print to print within a relatively large range.

It is possible to improve the prediction accuracy by calculating corrections while the print process is running already, based on the time that has been needed for the prints that have been made so far. However, this does not reduce the uncertainty at the time when the user submits his job.

It is an objection of the invention to improve the prediction accuracy of the scheduler at the time when a job is submitted.

In order to achieve this object, according to the invention, the scheduler has an input device permitting a user to input a calibration command causing the scheduler to apply a user-specific calibration function to the calculated expected processing time.

The invention is based on the consideration that the prediction accuracy can be improved significantly when the scheduler is specifically calibrated for each individual user. The reason is that, typically, each user will normally submit a certain type of jobs that have similar characteristics. Consequently, the variation of the processing time per document for the jobs of an individual user will normally be significantly smaller than the variation of the processing times per document in the entire spectrum of jobs that may be submitted by any user. The prediction accuracy can therefore be improved when the user is given the possibility to input a calibration command that implicitly or explicitly specifies a calibration of the scheduling algorithm for the type of jobs the user is (normally) submitting.

More specific optional features of the invention are indicated in the dependent claims.

In a preferred embodiment, the scheduler is adapted to perform, upon a command from the user, a calibration routine that comprises the steps of:

- prompting the user to submit a certain number of sample documents for processing;
- calculating an expected processing time for the job consisting of the submitted sample documents;
- commanding the document processing system to process the sample documents and counting the processing time that is actually needed for the sample documents; and
- comparing the counted processing time to the calculated expected processing time and defining a calibration function based on the result of the comparison.

In a preferred embodiment, the calibration function will include a multiplication of the calculated expected processing time with a certain calibration factor and/or the addition of a certain offset to the calculated expected processing time. Both the calibration factor and the offset may optionally be edited by the user.

When the calibration is based on sample documents, at least the calibration factor will be calculated by the scheduler in accordance with the relation between expected processing time and the actual processing time. Optionally, the user may still have the possibility to modify the calibration factor, e. g. by manually inputting a second calibration factor that will then be multiplied with the calibration factor calculated by the scheduler. The second calibration factor will reflect personal preferences and/or experiences of the user or his or her personal judgement on the nature of the documents to be processed.

Embodiment examples will now be described in conjunction with the drawings, wherein:

Fig. 1        is a block diagram of a document processing system to which the invention is applicable; and

Figs. 2 to 6   are examples of windows displayed on a user interface of the document processing system under the control of a scheduler.

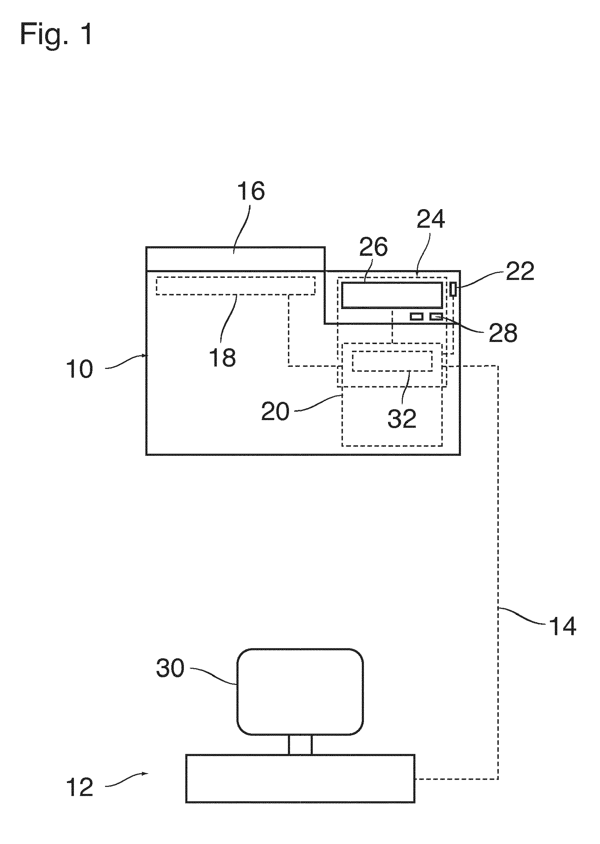

Fig. 1 illustrates a simple example of a document processing system comprising a high production digital printer 10 (with scanning and copying functions) and at least one remote work station 12 connected to the printer 10 via a network 14.

The printer 10 has a document feeder 16 and a scan unit 18 for feeding and scanning originals of documents to be copied. An electronic control unit 20 of the printer is connected to the scan unit 18 and to the network 14 for receiving print files either from the scan unit 18 or from the remote work station 12 and converting them into bitmap data that are suitable for driving a print engine (not shown) of the printer. In the example shown, print data may also be read from a portable memory device (e.g. a USB stick) that may be plugged into a socket 22.

The printer 10 further has a user interface 24 that is constituted in this example by a display screen 26, e.g. a touch-screen, and input buttons 28 on a control panel of the printer and by related software in the control unit 20, capable of controlling the display screen 26 and also capable of remote-controlling a display screen 30 of the work station 12, via a printer driver installed in the work station.

As is generally known in the art, the user interface 24 permits a user to enter job specifications for his print jobs either locally at the printer 10 or remotely from his work station 12.

A specific software module in the software of the user interface 24 is a scheduler 32 that is capable of calculating an expected processing time for a job to be processed, on the basis of the job specifications and the current status of the printer 10. Thus, when the user has submitted his print file and has entered the related job specifications, including among others the number of copies to be made, the scheduler 32 will calculate an estimate of the time that will be needed for processing the print job, and this time will be displayed on the local display screen 26 and/or the remote display screen 30.

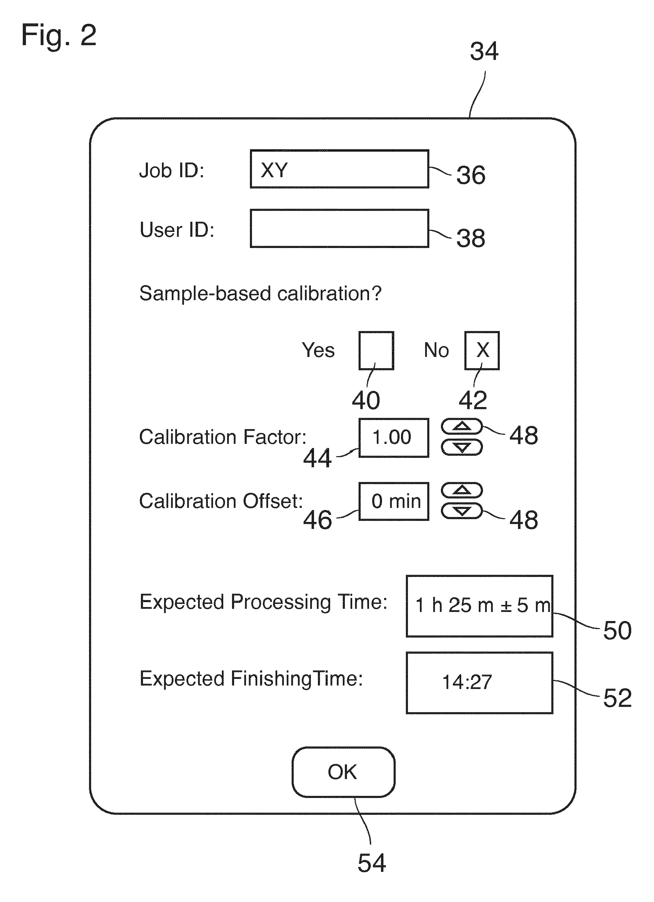

Figs. 2 to 6 are examples of different contents of a window 34 that is displayed on the screen 26 or 30 under the control of the scheduler 32.

Fig. 2 illustrates a case where the user has entered the job specification locally at the control panel of the printer 10. A job ID "XY" has automatically been assigned to the job and is displayed in a field 36 of the window 34. Another field 38 is provided for displaying and/or entering a user ID. However, in the present example, the user has not identified himself, so that the field 38 is empty.

Check boxes 40, 42 permit the user to enter a command for performing a calibration routine that is based on the processing of sample documents. In this example, no such calibration routine is to be performed.

A display field 44 indicates a default setting "1.00" of a calibration factor, and a field 46 indicates a default setting "0 min" of a calibration offset. Buttons 48 permit the user to increment or decrement the calibration factor and the calibration offset.

A field 50 is used for displaying the expected processing time as calculated by the scheduler 32. In the given example, the expected processing time for the print job is 1 h 25 m, with an expected tolerance of ±5m.

Another field 52 is used for displaying the time "14:27" at which the print job is expected to be ready. If the printer is not busy with printing another job, the expected finishing time will be the present time plus the processing time as displayed in the field 50. If the printer is still busy and the job that is presently being submitted is added at the end of a print queue, then the expected finishing time displayed in the field 52 will be the present time plus the expected processing times of all earlier jobs being processed and waiting in the print queue, respectively, plus the processing time for the present job as displayed in the field 50.

When the user does not want to calibrate the scheduler 32, he will simply press a button 54 "OK", in order launch the print job.

It will be understood that, if the window 34 is displayed on the local screen 26, which is a touch-screen, the check boxes 40, 42 can simply be ticked with a finger, the buttons 48 and 50 are also activated by a finger touch, and the display fields can be activated by a finger touch, and alphanumeric data can be entered via a keyboard (not shown). When the window 34 is displayed on the remote screen 30, the buttons and check boxes can be ticked with a mouse click and the other fields can be edited via a keyboard of the work station 12.

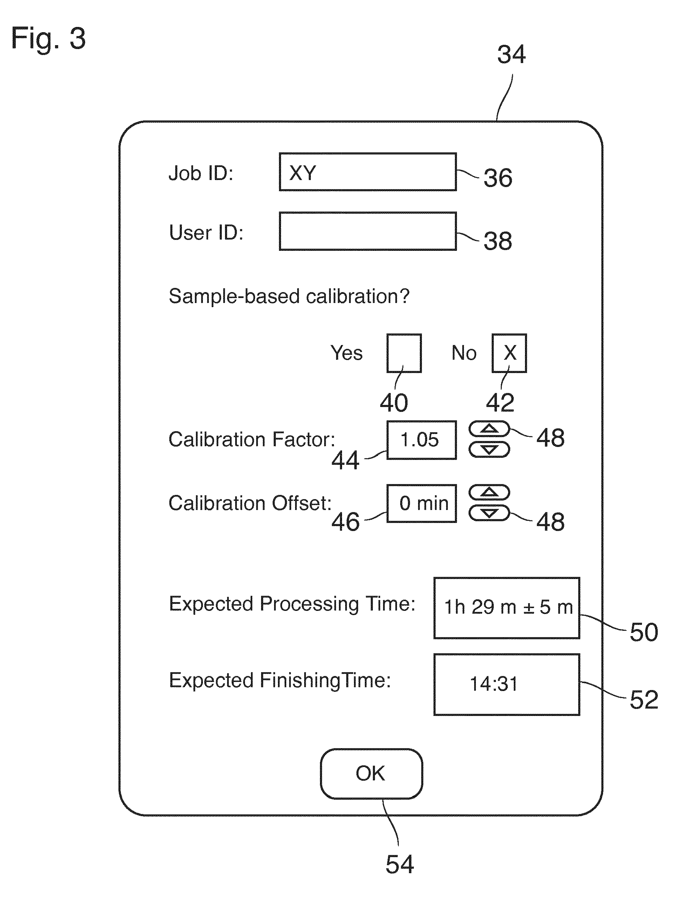

Fig. 3 illustrates an example where the user has entered a calibration command that consists in changing the calibration factor from 1.00 to 1.05. This has the effect that the expected processing time as displayed in the field 50 is multiplied by the calibration factor 1.05, i.e. increased by 5% (corresponding to 4 minutes in this example). Thus, when the user has made the experience that the expected processing times that are displayed for his print jobs in the field 50 are always about 5% too small, he may choose to calibrate the scheduler 32 by entering the calibration factor of 1.05, so that he may then read a more realistic indication of the time when the job will be finished directly from the field 52.

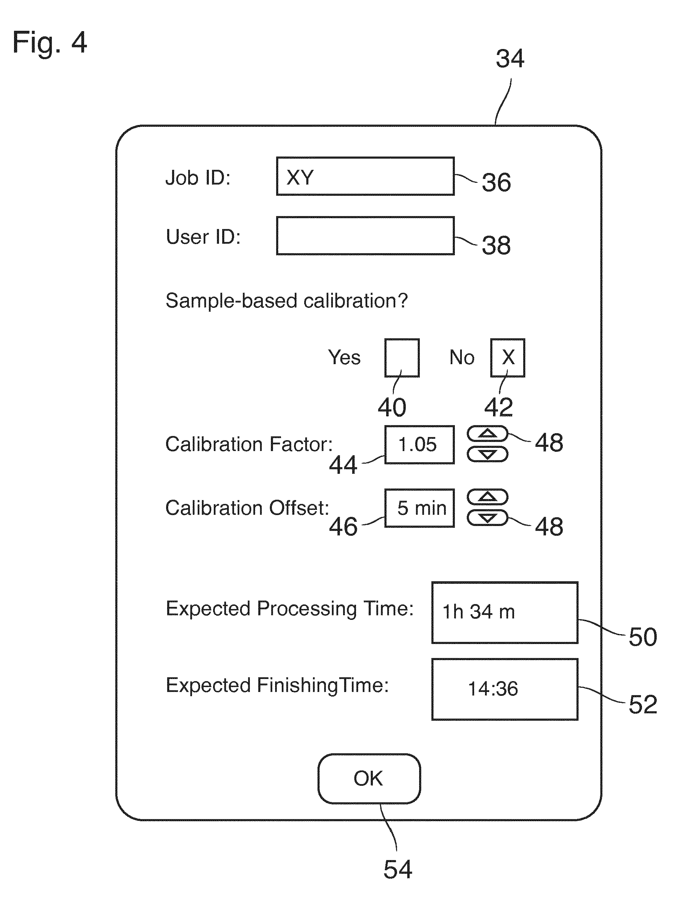

Fig. 4 illustrates an example where the user has additionally entered a calibration offset of 5 min in the field 46. Consequently, the expected processing time in the field 50 has been increased by another 5 min, and the expected finishing time in the field 52 has been increased accordingly.

In general, a calibration function f that is applied to the expected processing time $t_0$ as calculated by the scheduler 32 (and displayed in the field 50 in Fig. 2) has the form:

$$f(t_0) = t_0 * a + c$$

wherein "a" is the calibration factor shown in the field 44 and "c" is the offset shown in the field 46.

Thus, the settings of the calibration factor and calibration offset in Fig. 4 result in a calibration function:

$$f(t_0) = t_0 * 1,05 + 5$$

when the time is counted in minutes.

In the example shown in Fig. 4, no tolerance is indicated in the field 50, because it is assumed that the tolerance is absorbed in the offset entered by the user.

In general, the calibration offset will be selected by the user such that he can be relatively sure that his job will actually be ready when he arrives at the printer at the "Expected finishing time" as indicated in the field 52. This, the calibration offset will therefore mainly reflect personal preferences of the user.

When several print jobs are waiting in a print queue, the expected processing times for all these jobs are needed for calculating the expected finishing time for the last job. However, for the purpose of calculating the expected finishing time, it will be useful to neglect the calibration offsets that have been entered by the users for the earlier jobs. On the other hand, it may be useful to keep the calibration factors that have been entered by the users, because these factors will generally reflect the experiences of these users and may therefore lead to a more realistic result than the original calculation performed by the scheduler 32.

When a print job is submitted remotely from the work station 12, the identity of the user can of course be inferred from the communications protocol that is used for data traffic via the network 14, and a corresponding user ID will then automatically be entered in the field 38. Optionally, the last settings of the calibration factor and of the calibration offset may be stored for each individual user, so that, whenever a user is identified by his or her ID, the stored settings for the calibration factor and for the calibration offset will automatically be taken as the default settings in the fields 44 and 46.

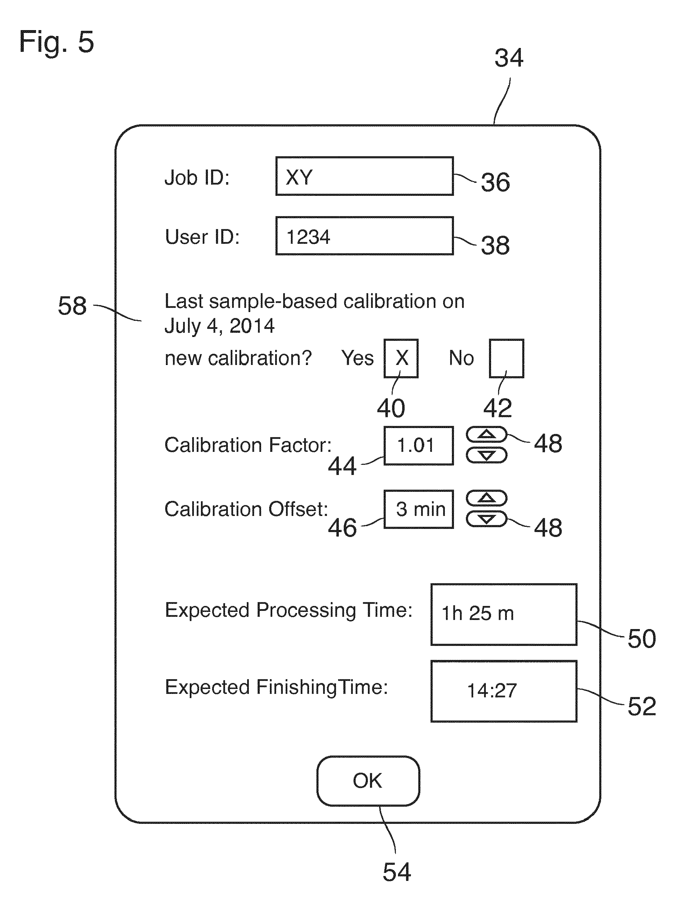

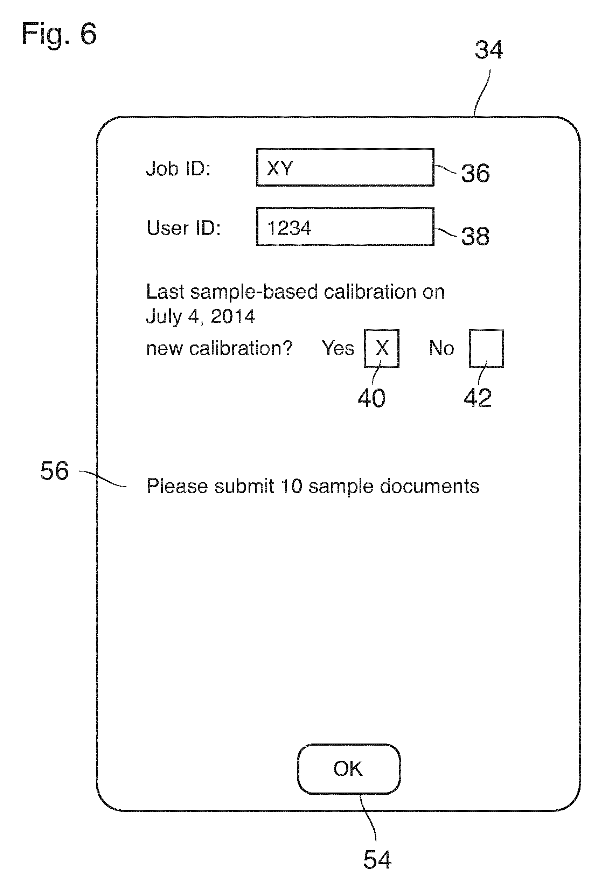

Figs. 5 and 6 illustrate an example where the user has chosen to perform a sample-based calibration routine by checking the box 40 (Fig. 5). Then, when the user presses the "OK" button 54, the contents of the window 34 will change to what is shown in Fig. 6. A message 56 prompts the user to submit a number (10 in this example) of sample documents. The user will thereupon submit 10 documents that are typical for the type of documents he usually wants to have processed. If the job is a copy job, the sample documents may be scanned-in with the scan unit 18. If the job data are entered via the USB socket 22 or via the network 14, and the submitted job includes at least 10 pages, then the control unit 20 may just take the first 10 pages of the print job as sample documents. As an alternative, the user may send a specific sample file including the 10 sample documents from his work station 12.

The scheduler 32 will apply its scheduling algorithm to calculate an expected processing time for the sample job. Then, the control unit 20 of the printer is caused to process (print) the sample documents, and the time needed for this process will be counted. Finally, the scheduler 32 compares the counted time to the calculated expected processing time and defines a calibration function on the basis of the comparison result. For example, the calibration function may be defined by setting the calibration factor "a" to the value that is obtained by dividing the counted time that has actually been needed for printing by the calculated time (and setting the offset "c" to zero or leaving it as it is).

When the user has submitted the sample documents, he or she will press the "OK" button 54, and the contents of the window 34 will switch back to what is shown in Fig. 5. In this window, the field 44 will show the calibration factor (1.01 in this example) that has been calculated on the basis of the sample documents. However, it is still possible for the user to edit this calibration factor afterwards.

In this case, the calibration function may take the form:

$$f(t_0) = t_0 * a * b$$

wherein "a" is the calibration factor that has been calculated by the scheduler 32 on the basis of the sample documents, and "b" is the calibration factor that the user has manually entered in the field 44 after the factor "a" has been calculated and displayed.

In another embodiment, when the user enters a calibration factor "b" in the field 44, the calibration function may be:

$$f(t_0) = t_0 * b$$

i.e. the factor "a" that has been calculated on the basis of the sample documents is just a proposal that the user may accept or reject.

In addition, the user may enter a calibration offset in the field 46.

In the example shown in Figs. 4 and 5, the user has been identified by an ID which is indicated in the field 38. In this case, in the window shown in Fig. 5, a message 58 advises the user of the date when the last sample-based calibration has been made. So, the user may decide whether or not he wants to re-calibrate the scheduler by checking one of the boxes 40, 42. If the user checks the box 42 "No", the previously stored user-edited settings for the calibration factor in the field 44 and the calibration offset in the field 46 will be retained.

In a variant of the invention calibration takes place for a certain type of job and is coupled to the certain type of job by a job type ID instead of a User ID as depicted in Figs 2-6. A type of job may be defined by a user and is for example related to a particular document type, such as 'Monthly Sales Figures' or 'Annual Report' or the like.

If the operating conditions of the printer 10 at the time when the sample-based calibration is performed are not the "normal" conditions, e. g. if the processing of the sample document is delayed because the printer has not its normal operating temperature and some additional time is needed for warning-up, then this additional time may be subtracted before the calibration factor is corrected.

**Claims**

1. A user interface for a document processing system (10), comprising a scheduler (32) adapted to calculate and display an expected processing time $t_0$ for a job to be processed, **characterized in that** the scheduler (32) has an input device (40, 42, 48) permitting a user to input a calibration command causing the scheduler to apply a user-specific calibration function $f(t_0)$ to the calculated expected processing time.

2. The user interface according to claim 1, wherein the scheduler (32) is adapted to perform, upon a calibration command from the user, a calibration routine that comprises the steps of:

   - prompting the user to submit a number of sample documents to be processed;
   - calculating an expected processing time $t_0$ for the job consisting of the submitted sample documents;
   - causing the processing system(10) to process the sample documents and counting the time needed for processing these sample documents; and
   - comparing the counted time to the calculated expected processing time $t_0$ for the sample documents and calculating the calibration function $f(t_0)$ on the basis of the comparison result.

3. The user interface according to claim 1 or 2, wherein the calibration function $f(t_0)$ has the form

$$f(t_0) = a * t_0 + c,$$

wherein "a" is a predetermined calibration factor and "c" is a predetermined calibration offset.

4. The user interface according to claims 2 and 3, wherein the scheduler (32) is adapted to define the calibration function on the basis of the comparison result by calculating and setting the calibration factor "a".

5. The user interface according to claim 3 or 4, wherein the calibration factor "a" and/or the calibration offset "c" is user-editable.

6. The user interface according to claim 5, wherein the scheduler (32) is adapted to store default settings for the calibration factor "a" and/or the calibration offset "c" for each user who is identified by a user ID.

Fig. 1

## Fig. 2

Job ID:          | XY | ⌐36

User ID:         |    | ⌐38

Sample-based calibration?

Yes [ ]    No [X]
    40       42

Calibration Factor: | 1.00 | ⬆⬇ ⌐48
    44

Calibration Offset: | 0 min | ⬆⬇
    46           48

Expected Processing Time: | 1 h 25 m ± 5 m |
                            ⌐50

Expected Finishing Time: | 14:27 |
                          ⌐52

( OK )

54

34

# Fig. 3

34

| | |
|---|---|
| Job ID: | XY — 36 |
| User ID: | — 38 |

Sample-based calibration?

Yes ☐    No ☒
40       42

Calibration Factor: 44 | 1.05 | ▲▼ — 48

Calibration Offset: 46 | 0 min | ▲▼ — 48

Expected Processing Time: | 1h 29 m ± 5 m | — 50

Expected FinishingTime: | 14:31 | — 52

OK

54

## Fig. 4

34

| | |
|---|---|
| Job ID: | XY — 36 |
| User ID: | — 38 |

Sample-based calibration?

Yes ☐    No ☒
40        42

Calibration Factor: 44 — 1.05    ▲▼ — 48

Calibration Offset: 46 — 5 min   ▲▼ — 48

Expected Processing Time:    1h 34 m — 50

Expected Finishing Time:     14:36 — 52

OK

54

Fig. 5

34

Job ID:    XY    36

User ID:    1234    38

58

Last sample-based calibration on
July 4, 2014

new calibration?    Yes [X]    No [ ]

40    42

Calibration Factor:    [1.01]  ⊝    48
44

Calibration Offset:    [3 min]  ⊝    48
46

Expected Processing Time:    [1h 25 m]    50

Expected Finishing Time:    [14:27]    52

[ OK ]

54

## Fig. 6

Job ID: XY — 36

User ID: 1234 — 38

Last sample-based calibration on July 4, 2014

new calibration?   Yes [ X ]   No [ ]

40          42

56 — Please submit 10 sample documents

OK

54

Europäisches
Patentamt

European
Patent Office

Office européen
des brevets

## EUROPEAN SEARCH REPORT

**Application Number**

EP 15 18 6337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 738 666 A2 (RICOH CO LTD [JP]) 4 June 2014 (2014-06-04) * paragraph [0014] - paragraph [0048] * * figures 5A-11D * ----- | 1-6 | INV. G06F3/12 |
| A | US 2010/245890 A1 (CHAKRABORTY RUMA [IN]) 30 September 2010 (2010-09-30) * paragraph [0011] - paragraph [0031] * * figure 1 * ----- | 1,5 | |

TECHNICAL FIELDS SEARCHED (IPC)

G06F
H04N
G06K

The present search report has been drawn up for all claims

| Place of search | Date of completion of the search | Examiner |
|---|---|---|
| The Hague | 19 January 2016 | Simigliani, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 6337

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2016

| Patent document cited in search report | | Publication date | Patent family member(s) | | Publication date |
|---|---|---|---|---|---|
| EP 2738666 | A2 | 04-06-2014 | EP 2738666 | A2 | 04-06-2014 |
| | | | JP 2014110051 | A | 12-06-2014 |
| | | | US 2014153038 | A1 | 05-06-2014 |
| US 2010245890 | A1 | 30-09-2010 | NONE | | |

For more details about this annex : see Official Journal of the European Patent Office, No. 12/82